# EUROPÄISCHE PATENTANMELDUNG

(11) **EP 1 199 003 A1**
(43) Veröffentlichungstag der Anmeldung: **24.04.2002**
(21) Anmeldenummer: 01890264.3
(22) Anmeldetag: 12.09.2001
(51) Int. Cl.: A45D 26/00

(54) **Pinzette**

(30) Priorität: 15.09.2000 AT 15802000
(71) Anmelder: Dietrich, Herbert, Dr., 2500 Baden (AT)
(72) Erfinder: Dietrich, Herbert, Dr., 2500 Baden (AT)
(74) Vertreter: Casati, Wilhelm, Dipl.-Ing.

(57) **Zusammenfassung**

Die Erfindung betrifft eine Pinzette zum Halten von streifen- oder fadenförmigem Material mit insbesonderes abrasiven Eigenschaften, beispielsweise für Dentalzwecke, wobei im Bereich des freien Endes eines jeden der beiden Schenkel (2, 3) der Pinzette, insbesondere stabförmige Klemmelemente (4, 4'), angeordnet sind, und wobei in geschlossener Lage der Pinzette, mindestens ein an einem Schenkel (2) angeordnetes Klemmelement (4') an zwei am anderen Schenkel (3) voneinander beabstandet angeordnete Klemmelemente (4) anliegt oder in eine dort befindliche Vertiefung eingreift.

## Beschreibung

Die Erfindung betrifft eine Pinzette zum Halten von streifen- oder fadenförmigem Material mit insbes. abrasiven Eigenschaften, beispielsweise für Dentalzwecke. Die Verwendung von handelsüblichen Polier- und Finierstreifen, die eine Breite von 5 - 6 mm haben, als streifenförmiges Material bereitet bei der intraoralen Ausarbeitung von Zahnfüllungen bzw. bei adhäsiv befestigten Restaurationen des Zahnes, insbesondere der Zahnkrone, vor allem platzbedingt, insbesondere wenn sich in der Mundhöhle noch ein vom zu behandelnden Zahn durchsetzter Kofferdamm befindet, Schwierigkeiten; dies gilt auch für Streifen mit halber Breite (2,5 - 3 mm) und für fadenförmiges Material.

Hier Abhilfe zu schaffen, ist eines der Ziele der Erfindung, die zu diesem Zweck vorsieht, daß im Bereich des freien Endes eines jeden der beiden Schenkel der Pinzette, insbesondere stabförmige Klemmelemente, angeordnet sind, wobei in geschlossener Lage der Pinzette, mindestens ein an einem Schenkel angeordnetes Klemmelement an zwei am anderen Schenkel voneinander beabstandet angeordnete Klemmelemente anliegt oder in eine dort befindliche Vertiefung eingreift. Bei Anwendung der erfindungsgemäß ausgestatteten Pinzette ist ein einwandfreies Halten des streifen- oder fadenförmigen Materials, beispielsweise eines Polierstreifens, das bzw. der sich innerhalb der Mundhöhle befindet, möglich, sodaß ein Streifen, der auch aus Metall bestehen kann, im Spalt zwischen zwei benachbarten Zähnen oder überhaupt an der Seitenfläche eines Zahnes hin- und herbewegt werden kann, um die Oberfläche zu glätten. Die Pinzette erlaubt hiebei ein einwandfreies Halten des streifen- oder fadenförmigen Materials mittels der Klemmelemente, ohne daß das Material, z.B. der Polierstreifen, durch die zusammenwirkenden Klemmelemente geknickt wird. Es können Streifen von halber Breite (2,5 - 3 mm) unterhalb des Kontaktpunktes benachbarter Zähne in den Interdentalraum eingeführt und einwandfrei dort bewegt werden, u.zw. in Längsrichtung des Streifens und auch quer zum Streifen, wodurch jede Stelle des Zahnes mit dem Streifen erreicht werden kann. Der Arbeitsteil des Polierstreifens bzw. des Fadens kann in der Länge (Arbeitslänge) durch Lösen und neuerliches Fixieren mittels der Pinzette stufenlos variiert werden. Ein Tausch des Streifens bzw. Fadens im Zuge eines Polier- bzw. Arbeitsvorganges ist somit nicht erforderlich, vielmehr steht die gesamte Länge des Streifens oder Fadens zur Ausarbeitung zur Verfügung. Die Anwendung der erfindungsgemäßen Pinzette erlaubt daher auch eine Ersparnis an Streifen bzw. Fäden in den zahnärztlichen Praxen.

In weiterer Ausgestaltung der Erfindung sind die Klemmelemente als zueinander parallelachsig angeordnete Zylinder mit bevorzugt kreisförmigem Querschnitt ausgebildet. Sie können durch Kleben, Löten oder Schweißen an der Innenseite der Schenkel der Pinzette befestigt werden. Gegen die Außenseite der Pinzette können die Zylinder auch abgeflacht sein. Die Zylinder könnten jedoch in einem Schnitt senkrecht zu ihrer Achse auch elliptischen Querschnitt besitzen. Auch können die Zylinder direkt aus dem Material der Pinzette herausgearbeitet werden, in welchem Falle dann die Befestigung der Klemmelemente durch besondere Befestigungsmittel bzw. durch Kleben, Löten oder Schweißen entfallen kann.

In einer weiteren Ausführungsform können die Klemmelemente der erfindungsgemäßen Pinzette so angeordnet werden, daß sie zumindest auf einer Seite die Schenkel der Pinzette überragen. So kann sichergestellt werden, daß die Klemmelemente genügend freie Länge aufweisen, um streifenförmiges Material über dessen gesamte Breite klemmen zu können, wodurch das streifenförmige Material schonend geklemmt wird.

Die Handhabung wird verbessert, wenn in weiterer Ausgestaltung der Erfindung die Längsachse der stabförmig ausgebildeten Klemmelemente mit der Längsachse der Schenkel der Pinzette einen stumpfen Winkel einschließt. Es sind jedoch auch Ausführungen mit spitzem oder rechtem Winkel anwendbar. Bei schlecht zugänglichen Stellen kann der Winkel zwischen 75° und 90° liegen.

Es ist auch eine Ausführungsform der Klemmelemente möglich, bei der diese bündig mit den Längsberandungen der Schenkel der Pinzette abschließen. Bei dieser Ausführungsform sind gegenüber der Pinzette vorstehende Klemmelemente vermieden.

Um die Friktion zwischen den Klemmelementen und dem streifen- oder fadenförmigen Material zu erhöhen, ist es zweckmäßig, wenn die Mantelfläche der Klemmelemente zumindest im Berührungsbereich mit dem streifen- oder fadenförmigen Material einen Friktionsbelag, z.B aus Diamantpulver, aufweist, wie dies eine bevorzugte Ausführungsform der erfindungsgemäßen Pinzette vorsieht. Zweckmäßig ist es, wenn die beim Klemmvorgang mit dem streifen- bzw. fadenförmigen Material nicht in Berührung kommenden Teile der Mantelfläche der Klemmelemente sowie deren ebene Stirnflächen frei von einem Friktionsbelag sind, insbesondere poliert sind.

Die Anordnung der Klemmelemente kann so erfolgen, daß bei in Klemmstellung befindlicher Pinzette in einem gedachten, achsnormalen Schnitt durch die Klemmzylinder, die Mitten der Kreisquerschnitte Eckpunkte eines gleichschenkeligen, rechtwinkeligen Dreiecks bilden. Die Zylinderdurchmesser der auf einer Pinzette vorgesehenen Klemmelemente können auch voneinander verschieden sein.

Die Erfindung wird nachstehend anhand der Zeichnung beispielsweise näher erläutert. Es zeigen,
Fig. 1 einen Zahn in einem Längsschnitt benachbart einem in Vorderansicht dargestellten Zahn,
Fig. 2 eine Draufsicht auf Fig. 1,
Fig. 3 eine Ausführungsform einer erfindungsgemäßen Pinzette in schaubildlicher Darstellung,
Fig. 4 die Pinzette gemäß Fig. 3 in Seitenansicht,
Fig. 5 einen Schnitt entlang der Linie V-V in Fig. 4,
Fig. 6 das vordere Ende einer Pinzette mit zwischen den Schenkeln geklemmtem Polierstreifen,
Fig. 7 eine gegenüber Fig. 3 abgeänderte Ausführungsform einer erfindungsgemäßen Pinzette in schaubildlicher Darstellung,
Fig. 8 eine Seitenansicht der in Fig. 7 dargestellten Pinzette, und
Fig. 9 das in Fig. 8 mit 9 bezeichnete Detail in gegenüber Fig. 8 vergrößerter Darstellung, wobei ein Polierstreifen in durch die Pinzettenschenkel geklemmter Lage dargestellt ist.

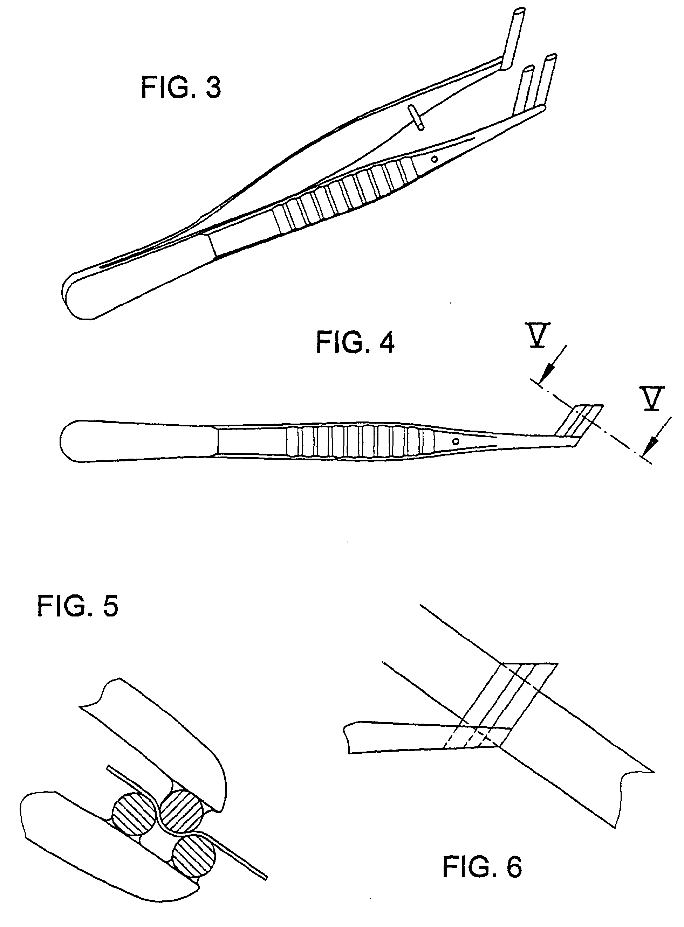

In der Zeichnung ist mit 1 als Beispiel für das streifen- oder fadenförmige Material ein Polierstreifen bezeichnet, wie er in der Zahnheilkunde Verwendung findet. Der mittels des Polierstreifens 1 zu glättende Zahn 11 ist mit einer adhäsiv am Zahnstumpf befestigten Restauration 12 in Form einer Zahnkrone versehen. Beim Kleben kann aus der Klemmfuge Klebstoff seitlich austreten, der einen Wulst 13 bildet, der entfernt werden muß, um eine glatte Zahnseitenfläche zu erzielen. Zum Entfernen derartiger Unregelmäßigkeiten dienen die Polierstreifen 1. Zum Halten und Bewegen des Polierstreifens 1 wird zweckmäßig von einer Pinzette Gebrauch gemacht, bei der im Bereich des freien Endes eines jeden der beiden Schenkel 2, 3 der Pinzette Klemmelemente 4, 4' angeordnet sind. Diese Klemmelemente sind in den dargestellten Ausführungsbeispielen (Fig. 3 - 9) stabförmig ausgebildet. Die Polierstreifen können aus Kunststoff, jedoch auch aus Metall bestehen (Metallmatrizenbänder). Die Dicke liegt bevorzugt in der Größenordnung von 40 µm.

In geschlossener Lage der Pinzette liegt ein am Schenkel 2 der Pinzette angeordnetes Klemmelement 4' an zwei am anderen Schenkel 3 voneinander beabstandet angeordneten Klemmelementen 4 an. In nicht dargestellter Weise könnte auch das an dem einen Schenkel vorgesehene Klemmelement etwa bei knopfartiger (kugelkalottenartiger) Ausbildung in eine am anderen Schenkel angeordnete kongruente Vertiefung eingreifen. Bei entsprechender Gestaltung der Klemmelemente kann auch in diesem Fall eine Beschädigung der Oberfläche des streifenförmigen Materials etwa durch Faltenbildung im Klemmbereich verhindert werden.

In den dargestellten Ausführungsbeispielen sind die Klemmelemente 4, 4' als zueinander parallelachsig angeordnete kreisförmige Zylinder ausgebildet. Die Befestigung der Zylinder an den Schenkeln 2 bzw. 3 kann durch Kleben, Löten oder Schweißen an der Innenseite 2', 3' der Schenkel 2, 3 der Pinzette erfolgen. Es könnte jedoch auch eine Schraubbefestigung vorgesehen werden. Auch könnten die Zylinder nach Art von Reitern auf die freien Schenkelenden aufgesetzt werden, in welchem Fall die Schenkelenden in einen am zylindrischen Klemmelement angeordneten, von einer Stirnfläche des Klemmelementes ausgehenden Längsschlitz eingreifen könnten.

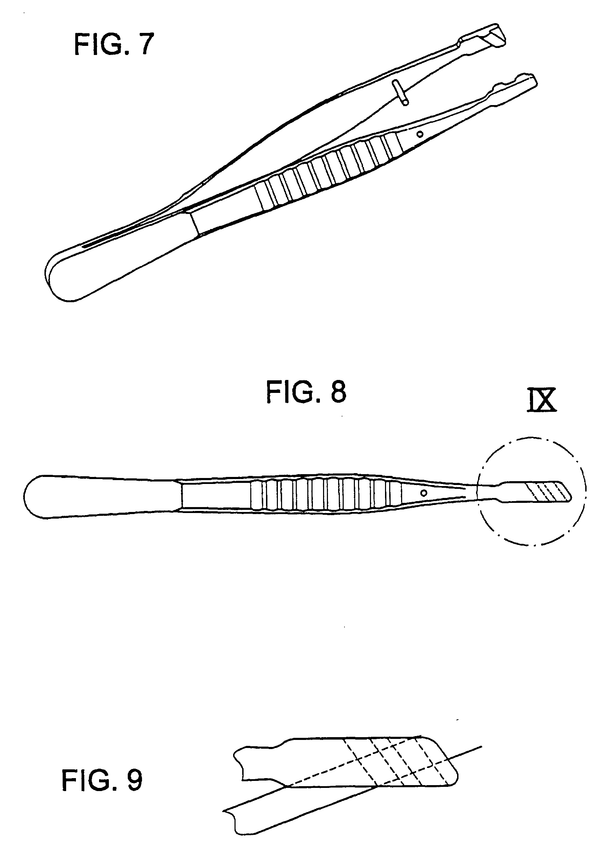

Bei der Ausführungsform gemäß den Fig. 3 und 4 überragen die Klemmelemente auf einer Seite die Schenkel der Pinzette. Die Anordnung könnte auch so getroffen werden, daß die Klemmelemente die Schenkel der Pinzette beidseits überragen, bevorzugt auf einer Seite zu 2/3 ihrer Länge und auf der anderen Seite zu 1/3 ihrer Länge. Unterschiedlich dazu schließen bei der Ausführungsform gemäß den Fig. 7 - 9 die Klemmelemente 4, 4' bündig mit den Längsberandungen der Schenkel 2, 3 der Pinzette ab.

In den dargestellten Ausführungsformen schließt die Längsachse 7 bzw. 7' der stabförmig ausgebildeten Klemmelemente 4, 4' mit der Längsachse 8 bzw. 9 der Schenkel 2, 3 einen stumpfen Winkel α ein.

Um die Reibung zwischen den Klemmelementen und dem faden- bzw. streifenförmigen Material (Polierstreifen 1) zu erhöhen, ist es zweckmäßig, die Mantelfläche der Klemmelemente 4, 4' zumindest im Berührungsbereich mit dem Polierstreifen 1 mit einem Friktionsbelag zu versehen; in den anderen Bereichen können die Klemmelemente poliert sein. Als Friktionsbelag geeignet ist z.B. Diamantpulver, das auf die Oberfläche der Klemmelemente aufgebracht wird.

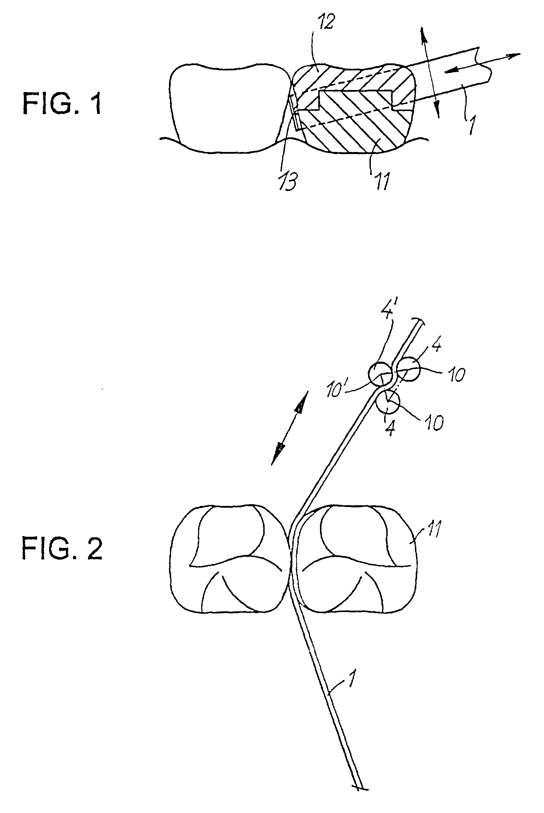

Wie die Fig. 2 und 5 zeigen, bilden in der Klemmstellung in einem achsnormalen Schnitt durch die Klemmzylinder die Mitten 10, 10' der Kreisquerschnitte Eckpunkte eines gleichschenkeligen rechtwinkeligen Dreiecks. Die Zylinderquerschnitte können in nicht dargestellter Weise auch elliptisch gestaltet sein.

Hinsichtlich der Anordnung der Klemmelemente auf den Schenkeln der Pinzette können rechte und linke Pinzetten hergestellt werden. Die Stirnseiten der Klemmelemente sollten poliert sein und somit frei von einem Friktionsbelag sein. Dies stellt sicher, daß auch weniger geübte Anwender der Pinzette die umgebende Zahnhartsubstanz nicht verkratzen, sohin die Oberfläche des Zahnes glatt bleibt.

## Patentansprüche

1. Pinzette zum Halten von streifen- oder fadenförmigem Material mit insbesondere abrasiven Eigenschaften, beispielsweise für Dentalzwecke, **dadurch gekennzeichnet, daß** im Bereich des freien Endes eines jeden der beiden Schenkel (2, 3) der Pinzette, insbesondere stabförmige Klemmelemente (4, 4'), angeordnet sind, wobei in geschlossener Lage der Pinzette, mindestens ein an einem Schenkel (2) angeordnetes Klemmelement (4') an zwei am anderen Schenkel (3) voneinander beabstandet angeordnete Klemmelemente (4) anliegt oder in eine dort befindliche Vertiefung eingreift.

2. Pinzette nach Anspruch 1, **dadurch gekennzeichnet, daß** die Klemmelemente (4, 4') als zueinander parallelachsig angeordnete Zylinder mit bevorzugt kreisförmigem Querschnitt ausgebildet sind und bevorzugt durch Kleben, Löten oder Schweißen an der Innenseite (2', 3') der Schenkel (2, 3) der Pinzette befestigt sind.

3. Pinzette nach Anspruch 1 oder 2, **dadurch gekennzeichnet, daß** die Klemmelemente (4, 4') zumindest auf einer Seite die Schenkel der Pinzette überragen (Fig. 3, 4, 6)

4. Pinzette nach einem der Ansprüche 1 bis 3, **dadurch gekennzeichnet, daß** die Längsachse (7, 7') der stabförmig ausgebildeten Klemmelemente (2, 3) mit der Längsachse (8 bzw. 9) der Schenkel (2, 3) einen stumpfen Winkel (α) einschließen.

5. Pinzette nach einem der Ansprüche 1, 2 oder 4, **dadurch gekennzeichnet, daß** die Klemmelemente (4, 4') an beiden Enden bündig mit den Längsberandungen der Schenkel (2, 3) der Pinzette abschließen (Fig. 7 - 9).

6. Pinzette nach einem der Ansprüche 1 bis 5, **dadurch gekennzeichnet, daß** die Mantelfläche der Klemmelemente (4, 4') zumindest im Berührungsbereich mit dem streifen- oder fadenförmigen Material einen Friktionsbelag, z.B. aus Diamantpulver aufweist.

7. Pinzette nach einem der Ansprüche 2 - 6, **dadurch gekennzeichnet, daß** in der Klemmstellung (Fig. 5) in einem achsnormalen Schnitt durch die Klemmzylinder die Mitten (10, 10') der Kreisquerschnitte Eckpunkte eines gleichschenkeligen, rechtwinkeligen Dreiecks bilden (Fig. 5).
